# EUROPÄISCHE PATENTSCHRIFT

(11) **EP 3 337 101 B1**
(45) Veröffentlichungstag und Bekanntmachung des Hinweises auf die Patenterteilung: **27.05.2020**
(21) Anmeldenummer: 16204576.9
(22) Anmeldetag: 16.12.2016
(51) Int. Cl.: H04L 12/28, H04L 12/26

(54) **INTELLIGENTER HYBRIDER NETZZUGANG**
INTELLIGENT HYBRID NETWORK ACCESS
ACCÈS DE RÉSEAU INTELLIGENT HYBRIDE

(43) Veröffentlichungstag der Anmeldung: 20.06.2018
(73) Patentinhaber: Deutsche Telekom AG, 53113 Bonn (DE)
(72) Erfinder: Heidemann, Cornelius, 64372 Ober-Ramstadt (DE)
(74) Vertreter: Braun-Dullaeus Pannen Emmerling Patent- & Rechtsanwaltspartnerschaft mbB

(56) Entgegenhaltungen:
- EP-A1- 2 365 663
- US-A1- 2006 133 518
- US-A1- 2016 142 222
- US-A1- 2016 315 808

## Beschreibung

Die Erfindung betrifft ein Verfahren zur Organisation einer Kommunikationsverbindung zwischen einem nutzerseitigen Zugangsendgerät ("Customer Premise Equipment" oder "CPE"), insbesondere in Form eines Home Gateway, und einem hybriden Zugangspunkt ("Hybrid Access Aggregation Point", "HAAP") zu einem Kommunikationsnetzwerk, wobei zwischen dem CPE und dem HAAP mindestens zwei Übertragungskanäle zum Transport eines Datenstroms vorgesehen sind, die sich zur Übertragung des Datenstroms jeweils unterschiedlicher Kommunikationsstandards, insbesondere eines Festnetzstandards und eines Mobilfunkstandards, bedienen, wobei die Übertragungskanäle zur Übertragung desselben Datenstroms gemeinsam und/oder wechselweise nutzbar sind.

Bekanntermaßen wird ein solcher "Hybrid Access" genutzt, um die Bandbreite eines herkömmlichen DSL-Anschlusses zu erhöhen, indem mehrere Übertragungskanäle "intelligent" gebündelt werden. Schließlich benötigen Dienste wie etwa das Video Streaming, das Gaming oder das Cloud Computing hohe Bandbreiten, um für den Nutzer attraktiv zu sein. Auf der anderen Seite verursacht die Erschließung von Haushalten mit Glasfaserleitungen zum Zwecke eines schnellen Internet in etwas abgelegenen Gebieten überdurchschnittlich hohe Kosten. Allerdings kann es auch in Stadtgebieten zu kurzfristigen Anforderungen höherer Datenraten kommen. Mit einem "Hybrid Access" können nun mehrere verfügbare Übertragungskanäle unterschiedlicher Übertragungsstandards gebündelt und die übertragbare Datenrate signifikant gesteigert werden.

Bislang ist insbesondere die intelligente Bündelung eines DSL-Festnetzanschlusses mit einem Mobilfunkanschluss auf LTE Basis bekannt. Dabei hat das nutzerseitige CPE zwei Zugangskanäle, die seitens des Netzes im HAAP zusammenlaufen und dort auf unterschiedliche Art behandelt werden. Zum einen kann im HAAP die Bündelung ("Bonding") realisiert werden, bei der die verschiedenen Übertragungskanäle, insbesondere DSL und LTE, zu einem gemeinsamen Nutzdatenkanal zusammengefasst werden. Zum anderen kann der Datenverkehr auf die verschiedenen Übertragungskanäle unter Lastausgleich verteilt werden ("load balancing"). Zudem kann eine Ausfallsicherung ("Failover") realisiert werden, bei der einer der Übertragungskanäle den Datenverkehr zum Internet oder Intranet übernimmt, wenn der jeweils andere Kanal ausfällt.

Mit der Bündelung wird einerseits die Übertragungsqualität deutlich verbessert und andererseits ein effektiver Ausfallschutz geschaffen. Das technische Konzept basiert auf einer Client-Server Architektur. Die Besonderheit liegt in einem intelligenten Algorithmus, der die Bündelung organisiert. Dieser entscheidet für jedes zu transferierende IP-Paket, welcher Übertragungskanal zu bevorzugen ist. Die über die verschiedenen Wege empfangenen IP-Pakete werden entsprechend zusammengefügt und neu geordnet. Bei der Organisation werden auch Übertragungseigenschaften der Kanäle, beispielsweise die Verzögerung und die Datenrate, berücksichtigt.

Den heute eingesetzten nutzerseitigen Zugangsendgeräten ("CPE") sind Mechanismen implementiert, die eine Verteilung auf verschiedene Übertragungskanäle bewerkstelligen. Dabei überwachen die CPEs die Zugangskanäle und wählen dann anhand unterschiedlicher - meist statischer - Kriterien aus, welcher Kanal respektive welche Kanäle für die Übertragung des anstehenden Datenvolumens als Übertragungskanäle genutzt werden sollen. Die aktuelle Leistungsfähigkeit der Übertragungskanäle auf Seiten des Netzproviders finden hingegen keine Berücksichtigung.

Dokumente US 2016/315808 A1, US 2006/133518 A1 und US 2016/142222 A1 repräsentieren ebenfalls den Stand der Technik.

Aufgabe der Erfindung ist es nunmehr, ein mit einfachen Mitteln umzusetzendes Verfahren und ein entsprechendes System zu schaffen, mit dem auch die aktuelle Situation seitens des Netzproviders in die Entscheidung bezüglich der Aufteilung des anstehenden Datenvolumens auf die zur Verfügung stehenden Übertragungskanäle eingeht.

Diese Aufgaben werden durch das Verfahren nach Anspruch 1 und das System nach Anspruch 10 gelöst. Bevorzugte Ausgestaltungen ergeben sich aus den jeweiligen Unteransprüchen.

Der Kern der Erfindung liegt anspruchsgemäß darin, dass seitens des Netzes eine regelnde Einrichtung, nachfolgend vereinfachend als "Regler" bezeichnet, vorgesehen wird, die anhand einer Anzahl ihr zur Verfügung stehender Eingangsparameter, die auch die aktuelle Situation im Kommunikationsnetzwerk repräsentieren, die Verteilung des zu übertragenden Datenstroms auf die zur Verfügung stehenden Übertragungskanäle seitens des Kommunikationsnetzwerks regelt. Dazu ist im Kommunikationsnetzwerk der Regler vorgesehen, der sich in einer oder mehreren Netzkomponenten realisiert und dem Eingangsparameter zur Verfügung gestellt werden. Dabei werden anspruchsgemäß innerhalb des Kommunikationsnetzwerks, nachfolgend auch vereinfachend als Netz oder Netzwerk bezeichnet, ausgewählte Zustandsparameter der Übertragungskanäle kontinuierlich bestimmt und dem Regler als sich verändernde "dynamische" Eingangsparameter zugeführt. Anhand dieser dynamischen Eingangsparameter und unter Zugrundelegung eines definierten Regelwerkes ermittelt der Regler für jeden der zur Verfügung stehenden Übertragungskanäle entsprechende Übertragungswerte. Die Übertragungswerte manifestieren sich in Entscheidungen, die an die einzelnen Netzkomponenten übermittelt werden. Die Übertragung des Datenstroms wird dann netzseitig entsprechend des Inhalts der Entscheidungen und damit entsprechend der ermittelten Übertragungswerte auf die jeweiligen Übertragungskanäle verteilt.

Dabei ist es vorteilhaft, die sich bezüglich der Verteilung des Datenstroms ergebende Entscheidung dem Zugangsendgerät ("CPE") mitzuteilen, damit das Zugangsendgerät die Aufteilung des Datenstroms auf die Übertragungskanäle entsprechend der ihm zugesandten Entscheidung vornehmen kann. In einer speziellen Ausführungsform wird dem Nutzer der Inhalt der Entscheidung bezüglich der Aufteilung der Datenströme über das Zugangsendgerät angezeigt.

Der besondere Vorteil dieser Vorgehensweise lieg darin, dass die Organisation der Kommunikationsverbindung anhand der Entscheidungen über die Aufteilung der Datenströme auf verschiedene Übertragungskanäle in die Hände des Netzbetreibers, insbesondere des Internet-Serviceproviders ("ISP"), gelegt wird, der netzseitig entsprechend automatisierte Regelmechanismen einführen kann. Der ISP kann beispielsweise in Abhängigkeit bestimmter Zugangsparameter, wie der aktuell nutzbaren Bandbreite von "xDSL", "fiber to the x" ("FTTX") oder WLAN und/oder dem Status der LTE Verfügbarkeit, nur selektive Übertragungsmodi erlauben. Vorteilhafterweise werden die nutzbaren Übertragungsraten und/oder die aktuelle Verfügbarkeit der Übertragungskanäle aktuell ermittelt und dem Regler als dynamische Eingangsparameter zugeführt. Dabei ist es von Vorteil, wenn die dynamischen Zustandsparameter der Übertragungskanäle regelmäßig in kurzen Zeitabständen, insbesondere in Abständen weniger Sekunden oder Bruchteilen von Sekunden, ermittelt und dem Regler zugeführt werden.

Mit der Erfindung ist eine besonders flexible Organisation des Hybrid Access mit seinen Zuständen, wie "failover", "bonding" und "load balancing", möglich, die erfindungsgemäß seitens des Netzwerks anhand der dem Regler zur Verfügung stehenden Eingangsparameter eingestellt werden. Zur Erhöhung der Flexibilität trägt auch die durch die Erfindung gewährleistete Modularität bei, die von den Lebenszyklen einzelner Produkte unabhängig ist.

Dabei ist es von besonderem Vorteil, wenn dem Regler neben den aktuell gemessenen dynamischen Eingangsparametern auch - zumindest nahezu - unveränderliche "statische" Eingangsparameter zur Verfügung stehen respektive zur Verfügung gestellt werden. Als solche statischen Eingangsparameter können beispielsweise technisch oder vertraglich beschränkte Zugangsmöglichkeiten des CPE, wie die Nutzung von "xDSL", "FTTX" oder WLAN, sowie dem Nutzer zugesicherte Bandbreiten ("low speed", "high speed") vorgegeben werden. Als statische Eingangsparameter können auch andere Leistungsmerkmale des dem Nutzer zugeordneten Produktes ("retail", "whole sale", "business") genutzt werden.

Weitere statische Parameter können sich aus bestimmten Marktanforderungen respektive Produktcharakteristika ergeben. Diese statischen Parameter können sich in Vorgaben, welcher Mechanismus ("Bonding", "Failover" oder "Loadbalancing") zu wählen ist, manifestieren. Diese statischen Parameter können von Produkt zu Produkt unterschiedlich sein.

Eine wichtige Rolle kommt auch dem Regelwerk zu, das dem Regler zugrunde liegt. Vorteilhafterweise gehen in dieses Regelwerk Vorgaben ein, die dem jeweiligen CPE zugeordnet sind. Insbesondere werden Sätze von Vorgaben in Form einer Matrix angelegt. Beispielsweise kann als Vorgabe die Art der Verteilung bei Vorliegen bestimmter Eingangsparameter in der Matrix eingetragen sein. Die Art der Verteilung kann aus den Alternativen "gemeinsame Nutzung der Kanäle" ("Bonding"), "gemeinsame Nutzung der Kanäle unter Lastausgleich" ("Load Balancing"), "Ausfallsicherung" ("Failover") und "Nutzung einer bestimmten Übertragungsgüte" ("Quality Class") ausgewählt werden.

Das System zur Durchführung des Verfahrens weist kundenseitig ein Zugangsendgerät ("CPE") und netzseitig einen hybriden Zugangspunkt ("HAAP") auf, der den Zugang zu dem Kommunikationsnetzwerk steuert. Das Kommunikationsnetzwerk umfasst mindestens einen Übertragungskanal nach einem Mobilfunkstandard und mindestens einen Übertragungskanal nach einem Festnetz Standard. Diese Übertragungskanäle sind für die Übertragung eines Datenstroms gemeinsam und/oder wechselweise nutzbar. Erfindungsgemäß ist ein Regler vorgesehen, der vorteilhafterweise im hybriden "HAAP" realisiert ist und dem Eingangsparameter zur Verfügung stehen. Weiterhin sind im Netzwerk Mittel zur Bestimmung von Zustandsparametern der Übertragungskanäle vorhanden, wobei die Mittel geeignet sind, dem Regler die Zustandsparametern als dynamische Eingangsparameter zuzuführen. Der Regler ermittelt anhand eines Regelwerkes Übertragungswerte für die einzelnen Übertragungskanäle und erzeugt entsprechende Entscheidungen bezüglich der Verteilung der Datenströme auf die Übertragungskanäle.

Vorteilhafterweise ist im Netzwerk eine Policy Charging and Rules Funktion ("PCRF") realisiert, die statische Eingangsparameter, insbesondere betreffend Zugangsmöglichkeiten des CPE und/oder betreffend besondere Vorgaben bezüglich der Bandbreiten der Übertragungskanäle und/oder betreffend den Nutzer, umfasst. Die Eingangsparameter sind vorteilhafterweise als Vorgaben in eine Entscheidungsmatrix eingetragen, auf die das HAAP Zugriff hat.

Die Erfindung wird nachfolgend anhand der Figuren näher beschrieben. Es zeigen:
**Figur 1** Komponenten des Systems zur Umsetzung des erfindungsgemäßen Verfahrens und
**Figur 2** eine Matrix zur Entscheidungsfindung mit beinhalteten Eingangsparametern.

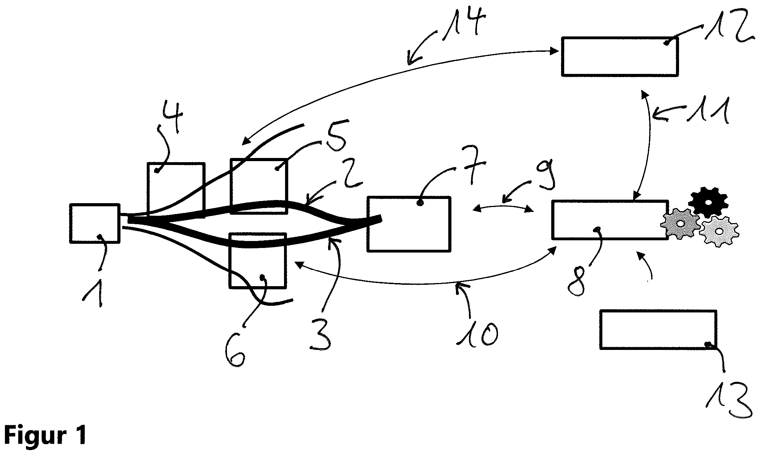

In Figur 1 sind die für die Umsetzung der Erfindung einsetzbaren Netzkomponenten skizziert. Auf Seiten des Nutzers befindet sich das Home Gateway 1 als kundenseitiges Zugangsendgerät ("CPE"), das dem Nutzer einen hybriden Zugang zu einem Kommunikationsnetzwerk mit in diesem Falle zwei Übertragungskanälen 2, 3 bietet. Dabei erfolgt der Zugang zu dem Mobilfunknetz, das den ersten der beiden Übertragungskanäle 2 bildet, über ein RAN 4, dem ein GGSN 5 ("Gateway GPRS Support Node") als Zugang zum Internet zugeordnet ist. Der Zugang zum DSL Festnetz, dem zweiten Übertragungskanal 3, erfolgt hingegen über ein BNG 6 ("Broadband Network Gateway"). Die Aufteilung der Kommunikationsverbindungen ausgehend von dem CPE 1 auf die beiden Übertragungskanäle erfolgt seitens des Netzwerkes mittels eines hybriden Zugangspunktes 7 ("HAAP"), in dem die beiden Übertragungskanäle 2 und 3 gebündelt und der Datenverkehr über die Übertragungskanäle 2 und 3 organisiert wird.

Im Kommunikationsnetzwerk sind verschiedene Komponenten vorgesehen, die zur Erzeugung und/oder Speicherung der von dem Regler benötigten Eingangsparameter dienen und die in der Art einer "state machine" verschiedene Zustände einnehmen können. Als zentrale Einheit dieser "state machine" ist ein AAA ("Autorisation, Authentification and Accounting") Server 8 im Netz etabliert, der über eine Schnittstelle 9 in unmittelbarer Datenverbindung zu einem hybriden Zugangspunkt HAAP 7 steht. Das HAAP 7 kann Kontrollinformation, insbesondere die Entscheidungen bezüglich der Aufteilung, über einen der beiden Übertragungskanäle 2 oder 3 an das CPE 1 senden. Dafür besteht zwischen dem AAA-Server 8 und dem BNG 6 eine Datenleitung 10, über die Daten mit dem Netzwerk bidirektional ausgetauscht werden.

Eine ebensolche bidirektionale Datenleitung 11 ist zwischen dem AAA-Server 8 und einer "Policy, Charging and Rules Function" ("PCRF") vorgesehen, die in einem entsprechenden PCRF Netzwerkelement 12 etabliert ist und der Steuerung der Dienstgüte im Mobilfunknetz dient. Das PCRF Netzwerkelement 12 steht mit dem GGSN 5 in bidirektionaler datenleitender Verbindung.

Zur Speicherung bestimmter Marktanforderungen ist ein "Telecom Directory Services" ("TDS") 13 vorgesehen, der dem AAA-Server 8 entsprechende Daten über die Leitung 14 zuführt.

In dem AAA-Server 8 werden die statischen und die dynamischen Eingangsparameter zusammengeführt und anhand des Regelwerkes Entscheidungen bezüglich der Betriebsmodi und insbesondere bezüglich der Verteilung der Datenströme auf die verschiedenen Übertragungskanäle getroffen. Die Entscheidungen werden dann zum Zwecke der Umsetzung über die Schnittstelle 9 an das HAAP 7 ausgegeben. Das HAAP 7 setzt die Entscheidungen um und sendet entsprechende Kontrollnachrichten an das CPE, damit dieses beispielsweise das LTE Interface an- oder abschalten kann.

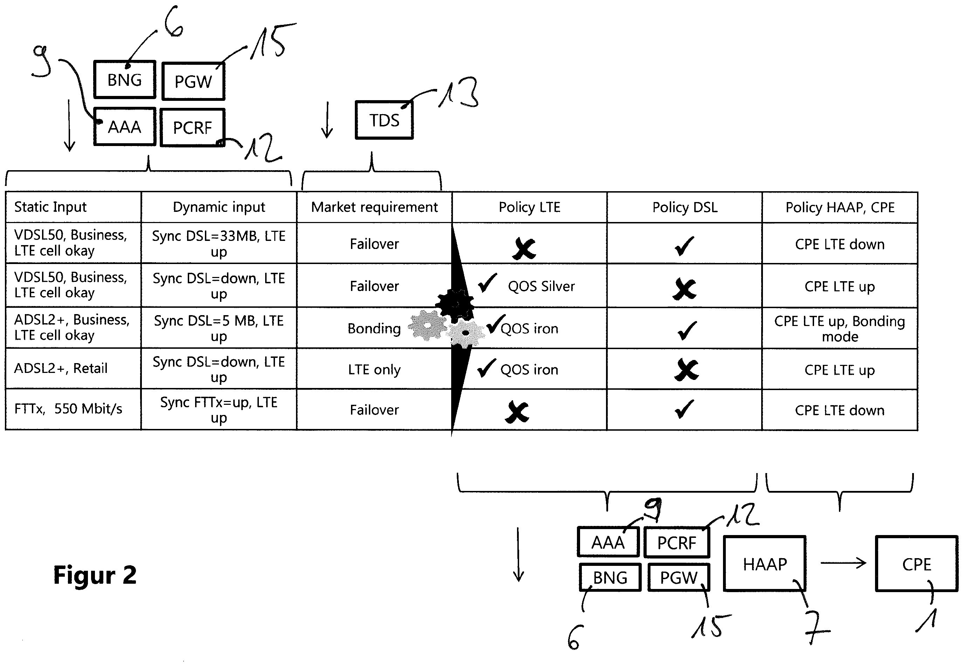

In Figur 2 ist nunmehr eine Matrix dargestellt, in der beispielhaft Eingangsparameter als Vorgaben bezüglich einzelner Anschlüsse eingetragen sind. Anhand eines implementierten Regelwerkes werden in der Matrix auf der Grundlage der Vorgaben Entscheidungen bezüglich der Übertragungswerte getroffen und an das HAAP übermittelt. Die einzelnen Zeilen repräsentieren somit jeweils einen Anschluss.

In der ersten Spalte der Matrix sind statische Eingangsparameter abgelegt. Als statische Eingangsparameter gehen die Art des Festnetzanschlusses, hier VDSL50, ADSL2+ und FTTx, und die Art des Anschlusses, "Business", Privatkunde ("Retail") und im Falle des Glasfaseranschlusses die Übertragungsrate (550 Mbit/s), in die jeweiligen Elemente ein. In denselben Elementen kann auch der Zustand der LTE Zelle vermerkt sein (hier "LTE cell ok").

In der zweiten Spalte der Matrix sind hingegen die dynamischen Eingangsparameter abgelegt, die für den jeweiligen Anschluss aktuell gemessen wurden. Im vorliegenden Fall ist die aktuelle Datenrate der DSL- oder Glasfaserverbindung in einem absoluten Wert (hier "33 MB" und "5 MB") oder in einer Verfügbarkeit (hier "down" und "up") sowie die Verfügbarkeit der LTE Verbindung (hier "down" und "up") vermerkt. Es kann auch vermerkt sein, inwieweit aktuell ein öffentlicher WLAN Anschluss zur Verfügung steht.

Die Werte der statischen und die dynamischen Eingangsparameter wurden vom BNG 6, vom LTE "Packet Gateway" ("PGW") 15, vom AAA-Server 8 und/oder vom PCRF 12 generiert und in die Matrix eingetragen.

In der dritten Spalte der Matrix sind als weitere statische Eingangsparameter bestimmte Produktcharakteristika ("Market Requirements") eingetragen, die vom TDS 13 stammen. So ist dort vermerkt, ob für den Anschluss lediglich eine Ausfallsicherung ("Failover") vorgesehen ist oder ob die gemeinsame Nutzung der Kanäle ("Bonding") zur Verfügung steht. Im Falle eines Anschlusses steht nur die LTE Leitung ("LTE only") zur Verfügung.

Aus den in der Matrix eingetragenen Eingangsparametern wird für jeden Anschluss mittels des Regelwerkes 16 ermittelt, ob und wie bezüglich der Aufteilung eines Datenstromes auf die Übertragungskanäle zu verfahren ist.

Die mit dem Regelwerk getroffenen Entscheidungen werden anhand von in der vierten Spalte ("Policy LTE") und fünften Spalte ("Policy DSL") eingetragenen Strategien gefiltert, die aktuell seitens des Netzes vorgegeben sind. In diesen Spalten ist im vorliegenden Fall eingetragen, ob der LTE respektive der DSL Übertragungskanal offen ("√") oder geschlossen ("X") ist und mit welcher Qualität ("QOS Silver", QOS Iron") er zur Verfügung steht. Die Eintragungen bezüglich der Strategie werden an das BNG 6, das PGW 15, den AAA-Server 8 und das PCRF 12 gesendet.

In der letzten Spalte der Matrix ist dann die sich ergebende Entscheidung eingetragen, die an das HAAP 7 und von dort an das CPE 1 gesendet wird.

Im Falle der vorliegenden Matrix ergibt sich nun für den durch die erste Zeile repräsentierten Anschluss, dass bei aktuell verfügbarem LTE Übertragungskanal ("LTE up") und einer DSL Bandbreite von 33 MB dem CPE die Entscheidung signalisiert wird, im Zuge der Ausfallsicherung ("Failover") den LTE Übertragungskanal abzuschalten ("CPE LTE down"), weil dieser nach der "Policy LTE" gesperrt ist. Damit nutzt der erste Anschluss für die Datenübertragung nur den DSL Übertragungskanal mit 33 MB.

Für den durch die zweite Zeile repräsentierten Anschluss ergibt sich, dass bei aktuell nicht verfügbarem DSL Übertragungskanal und bei verfügbarem LTE Übertragungskanal ("LTE up") die Entscheidung signalisiert wird, im Zuge der Ausfallsicherung ("Failover") den LTE Übertragungskanal mit der Dienstgüte "QOS Silver" zu nutzen ("CPE LTE up"), weil nach der Policy der DSL Kanal gesperrt ist.

Für den durch die dritte Zeile repräsentierten Anschluss ergibt sich, dass bei einem aktuell mit einer Bandbreite von 5 MB arbeitenden DSL Übertragungskanal und bei verfügbarem LTE Übertragungskanal ("LTE up") die Entscheidung signalisiert wird, den zu sendenden Datenstrom im Bonding auf den LTE Übertragungskanal mit der Dienstgüte "QOS Iron" und auf den DSL Kanal Übertragungskanal aufzuteilen ("CPE LTE up, Bonding Mode"), da auch nach der Policy beide Übertragungskanäle offen sind.

Für den durch die vierte Zeile repräsentierten Anschluss ergibt sich, dass bei einem aktuell nicht verfügbaren DSL Übertragungskanal und bei verfügbarem LTE Übertragungskanal ("LTE up") die Entscheidung signalisiert wird, es bei der Übertragung über den LTE Übertragungskanal zu belassen ("CPE LTE up") und darüber mit einer Dienstgüte "QOS Iron" zu senden. Nach der Produktcharakteristik des Anschlusses ist ohnehin nur der LTE Übertragungskanal erlaubt ("LTE only"), entsprechend ist nach der Policy der DSL Übertragungskanal gesperrt.

Im Falle des durch die letzte Zeile repräsentierten fünften Anschluss mit einem Glasfaserkanal ergibt sich, dass bei einem aktuell verfügbaren Glasfaserkanal und bei verfügbarem LTE Übertragungskanal ("LTE up") im Falle des Failover die Entscheidung signalisiert wird, den LTE Übertragungskanal abzuschalten ("CPE LTE down"). Nach der Policy ist der LTE Übertragungskanal gesperrt.

## Patentansprüche

1. Verfahren zur Organisation einer Kommunikationsverbindung zwischen einem kundenseitigen Zugangsendgerät "CPE" (1) und einem hybriden Zugangspunkt "HAAP" (7) zu einem Kommunikationsnetzwerk, wobei
zwischen dem CPE (1) und dem HAAP (7) mindestens zwei Übertragungskanäle (2,3) zum Transport eines Datenstroms vorgesehen sind, die sich zur Übertragung des Datenstroms jeweils unterschiedlicher Kommunikationsstandards, insbesondere eines Festnetzstandards und eines Mobilfunkstandards, bedienen, wobei
die Übertragungskanäle (2,3) zur Übertragung desselben Datenstroms gemeinsam und/oder wechselweise nutzbar sind, wobei
seitens des Kommunikationsnetzwerks ein Regler vorgesehen ist, dem Eingangsparameter zur Verfügung stehen, wobei
Zustandsparameter der Übertragungskanäle (2,3) bestimmt und dem Regler als dynamische Eingangsparameter zugeführt werden,
**dadurch gekennzeichnet,**
**dass** die Zustandsparameter in kurzen Zeitabständen ermittelt werden, dass der Regler anhand der dynamischen Eingangsparameter und eines Regelwerkes Übertragungswerte für jeden Übertragungskanal (2,3) ermittelt und dass die Übertragung des Datenstroms entsprechend der Übertragungswerte auf die Übertragungskanäle (2,3) verteilt wird.

2. Verfahren nach Anspruch 1,
**dadurch gekennzeichnet,**
**dass** als dynamische Eingangsparameter aktuell nutzbare Übertragungsraten und/oder die aktuelle Verfügbarkeit der Übertragungskanäle ermittelt werden.

3. Verfahren nach Anspruch 1 oder 2,
**dadurch gekennzeichnet,**
**dass** dem Regler neben den dynamischen Eingangsparametern statische Eingangsparameter, insbesondere betreffend Zugangsmöglichkeiten des CPE (1) und/oder vorgegebene Bandbreiten und/oder dem Nutzer zugeordnete Leistungsmerkmale, zur Verfügung stehen.

4. Verfahren nach einem der vorherigen Ansprüche,
**dadurch gekennzeichnet,**
**dass** dem Regelwerk Produktspezifika zugrunde liegen, die dem jeweiligen CPE (1) zugeordnet sind.

5. Verfahren nach Anspruch 4,
**dadurch gekennzeichnet,**
**dass** als Produktspezifika ein Satz von Entscheidungen vorgegeben ist, wobei insbesondere eine Art der Verteilung bei Vorliegen bestimmter Eingangsparameter zu wählen ist.

6. Verfahren nach Anspruch 5,
**dadurch gekennzeichnet,**
**dass** als Art von Verteilung aus den Möglichkeiten einer gemeinsamen Nutzung der Kanäle "Bonding", einer gemeinsamen Nutzung der Kanäle unter Lastausgleich "Load Balancing", einer reinen Ausfallsicherung "Failover" oder der Nutzung einer bestimmten Übertragungsgüte "Quality Class" zu wählen ist.

7. Verfahren nach einem der vorherigen Ansprüche,
**dadurch gekennzeichnet,**
**dass** die sich aus den Übertragungswerten ergebende Verteilung des Datenstroms dem Zugangsendgerät als Entscheidung mitgeteilt wird.

8. Verfahren nach Anspruch 7,
**dadurch gekennzeichnet,**
**dass** die Verteilung des Datenstroms auf die Übertragungskanäle (2,3) im Zugangsendgerät (1) entsprechend der Entscheidung eingestellt wird.

9. Verfahren nach einem der vorherigen Ansprüche,
**dadurch gekennzeichnet,**
**dass** die Zustandsparameter der Übertragungskanäle regelmäßig in kurzen Zeitabständen ermittelt und dem Regler aktuell zugeführt werden.

10. System zur Durchführung des Verfahrens nach einem der vorherigen Ansprüche aufweisend
ein kundenseitiges Zugangsendgerät "CPE" (1) und
einen hybriden Zugangspunkt "HAAP" (7) zu einem Kommunikationsnetzwerk umfassend mindestens je einen Übertragungskanal (2) nach einem Mobilfunkstandard und einen Übertragungskanal (3) nach einem Festnetzstandard, wobei die Übertragungskanäle (2,3) zur Übertragung desselben Datenstroms gemeinsam und/oder wechselweise nutzbar sind,
einen Regler, dem Eingangsparameter zur Verfügung stehen, Mittel zur Bestimmung von Zustandsparametern der Übertragungskanäle (2,3), wobei die Mittel geeignet sind, dem Regler die Zustandsparametern als dynamische Eingangsparameter zuzuführen,
**dadurch gekennzeichnet,**
**dass** die Zustandparameter in kurzen Zeitabständen ermittelt werden, dass der Regler anhand der dynamischen Eingangsparameter und eines Regelwerkes für die Übertragungskanäle (2,3) Übertragungswerte ermittelt und entsprechende Entscheidungen trifft, wie Datenströme auf die Übertragungskanäle (2,3) verteilt werden.

11. System nach Anspruch 10,
**dadurch gekennzeichnet,**
**dass** im Netzwerk eine Policy Charging and Rules Funktion "PRCF" (12) realisiert ist, die statische Eingangsparameter, insbesondere betreffend Zugangsmöglichkeiten des CPE (1) und/oder vorgegebene Bandbreiten und/oder dem Nutzer zugeordnete Produktspezifika, umfasst.

12. System nach Anspruch 10 oder 11,
**dadurch gekennzeichnet,**
**dass** der Regler im hybriden Zugangspunkt "HAAP" (7) realisiert ist.

13. System nach einem der Ansprüche 11,
**dadurch gekennzeichnet,**
**dass** die Eingangsparameter als Vorgaben in eine Entscheidungsmatrix eingehen, auf die der HAAP (7) Zugriff hat.

14. System nach einem der Ansprüche 10 bis 13,
**dadurch gekennzeichnet,**
**dass** die Produktspezifika "Market Requirements" in einer Datenbank Funktion realisiert sind.

## Claims

1. A method for organising a communication link between customer-provided equipment "CPE" (1) and a hybrid access aggregation point "HAAP" (7) to a communication network, wherein
at least two transmission channels (2, 3) are provided between the CPE (1) and the HAAP (7) for transporting a data stream, each of which uses different communication standards, in particular a landline standard and a mobile-phone standard, for transmitting said data stream, wherein
the transmission channels (2, 3) can be used jointly and/or alternately for transmitting said data stream, wherein
a controller is provided on the communication network side, which controller is provided with input parameters, wherein
status parameters of the transmission channels (2, 3) are detected and supplied to the controller as dynamic input parameters,
**characterized in that**
the status parameters are detected at short time intervals, that the controller determines transmission values for each transmission channel (2, 3) based on the dynamic input parameters and on a defined code, and that the transmission of the data stream is distributed among the transmission channels (2, 3) according to the transmission values.

2. The method according to Claim 1,
**characterized in that**
the dynamic input parameters to be detected are currently usable transmission rates and/or the current availability of the transmission channels.

3. The method according to Claim 1 or 2,
**characterized in that**
the controller is provided with static input parameters in addition to the dynamic input parameters, in particular regarding access options of the CPE (1) and/or predefined bandwidths and/or performance characteristics associated with the user.

4. The method according to any one of the preceding claims,
**characterized in that**
the defined code is based on product specifics, which are associated with the respective CPE (1).

5. The method according to Claim 4,
**characterized in that**
a set of decisions is predefined as product specifics, wherein said decisions in particular relate to selecting a distribution type when certain input parameters are present.

6. The method according to Claim 5,
**characterized in that**
the distribution types are selected from the options of sharing the channels - "Bonding", sharing the channels while balancing the load - "Load Balancing", employing an outright failover protection - "Failover", or using a specific transmission quality - "Quality Class".

7. The method according to any one of the preceding claims,
**characterized in that**
the distribution of the data stream resulting from the transmission values is communicated to the access terminal as a decision.

8. The method according to Claim 7,
**characterized in that**
the distribution of the data stream to the transmission channels (2, 3) is adjusted in the customer terminal (1) according to the decision.

9. The method according to any one of the preceding claims,
**characterized in that**
the status parameters of the transmission channels are detected regularly in short intervals and are immediately supplied to the controller.

10. A system for executing the method according to any one of the preceding claims, having
customer-provided equipment "CPE" (1) and
a hybrid access aggregation point "HAAP" (7) to a communication network comprising at least one respective transmission channel (2) based on a mobile-phone standard and one respective transmission channel (3) based on a landline standard, wherein the transmission channels (2, 3) can be used jointly and/or alternately for transmitting said data stream,
a controller which is provided with input parameters, means for detecting status parameters of the transmission channels (2, 3), wherein the means are suitable to supply the status parameters to the controller as dynamic input parameters,
**characterized in that**
the status parameters are detected at short time intervals, that the controller determines transmission values for the transmission channels (2, 3) based on the dynamic input parameters and on a defined code, and that said controller correspondingly makes decisions regarding the manner in which data streams are distributed among the transmission channels (2, 3).

11. The system according to Claim 10,
**characterized in that**
a Policy Charging and Rules Function "PRCF" (12) is realized in the network, which comprises static input parameters, in particular regarding access options of the CPE (1) and/or predefined bandwidths and/or product specifics associated with the user.

12. The system according to Claim 10 or 11,
**characterized in that**
the controller is realized in the hybrid access aggregation point "HAAP" (7).

13. The system according to Claim 11,
**characterized in that**
the input parameters are entered as inputs in a decision matrix to which the HAAP (7) has access.

14. The system according to any one of Claims 10 to 13,
**characterized in that**
the product specifics "Market Requirements" are realized in a database function.

## Revendications

1. Procédé d'organisation d'une liaison de communication entre un terminal d'accès client « CPE » (1) et un point d'accès hybride «HAAP» (7) vers un réseau de communication,
au moins deux canaux de transmission (2, 3) étant prévus entre le CPE (1) et le HAAP (7) pour transporter un flux de données, qui utilisent pour la transmission du flux de données des normes de communication différentes, en particulier une norme de réseau fixe et une norme radio mobile, dans lequel
les canaux de transmission (2, 3) pour la transmission du même flux de données peut être utilisé conjointement et/ou alternativement, dans lequel
un contrôleur est fourni de la part du réseau de communication, pour lequel des paramètres d'entrée étant disponibles, dans lequel
des paramètres d'état des canaux de transmission (2, 3) sont déterminés et fournis au contrôleur en tant que paramètres d'entrée dynamiques,
**caractérisé en ce que**
les paramètres d'état sont déterminés à de courts intervalles de temps, que le contrôleur utilise les paramètres d'entrée dynamiques et un ensemble de règles pour transmettre des valeurs pour chaque canal de transmission (2, 3) déterminé et que la transmission du flux de données est distribuée aux canaux de transmission (2, 3) en fonction des valeurs de transmission.

2. Procédé selon la revendication 1,
**caractérisé en ce que**
les débits de transmission actuellement utilisables et/ou la disponibilité actuelle des canaux de transmission sont déterminés comme paramètres d'entrée dynamiques.

3. Procédé selon la revendication 1 ou 2,
**caractérisé en ce qu'**
en plus des paramètres d'entrée dynamiques, le contrôleur possède des paramètres d'entrée statiques, notamment en ce qui concerne les options d'accès pour le CPE (1) et/ou les largeurs de bande prédéterminées et/ou les caractéristiques de performance attribuées à l'utilisateur.

4. Procédé selon une quelconque des revendications précédentes,
**caractérisé en ce que**
l'ensemble de règles est basé sur des spécificités de produit qui sont affectées au CPE respectif (1).

5. Procédé selon la revendication 4,
**caractérisé en ce qu'**
un ensemble de décisions est spécifié en tant que spécificités de produit, dans lequel en particulier un type de distribution doit être sélectionné lorsque certains paramètres d'entrée sont présents.

6. Procédé selon la revendication 5,
**caractérisé en ce que**,
comme type de distribution à partir des possibilités d'une utilisation partagée des canaux Bonding, une utilisation partagée des canaux sous équilibrage de charge Load Balancing, un basculement pur Failover ou l'utilisation d'une certaine qualité de transmission Quality Class doit être sélectionné.

7. Procédé selon une quelconque des revendications précédentes,
**caractérisé en ce que**
la répartition du flux de données résultant des valeurs de transmission est communiquée au terminal d'accès en tant que décision.

8. Procédé selon la revendication 7,
**caractérisé en ce que**
la répartition du flux de données sur les canaux de transmission (2, 3) dans le terminal d'accès (1) est établie conformément à la décision.

9. Procédé selon une quelconque des revendications précédentes,
**caractérisé en ce que**
les paramètres d'état des canaux de transmission sont déterminés régulièrement à de courts intervalles de temps et sont actuellement fournis au contrôleur.

10. Système pour mettre en œuvre le procédé selon une des revendications précédentes, comprenant
un terminal d'accès côté client « CPE » (1) et
un point d'accès hybride « HAAP » (7) à un réseau de communication comprenant au moins chacun un canal de transmission (2) selon une norme de radio mobile et un canal de transmission (3) selon une norme de réseau fixe, les canaux de transmission (2, 3) pour la transmission du même flux de données étant utilisés conjointement et/ou alternativement,
un contrôleur dont les paramètres d'entrée sont disponibles, des moyens pour déterminer les paramètres d'état des canaux de transmission (2, 3), les moyens étant adaptés pour fournir les paramètres d'état au contrôleur en tant que paramètres d'entrée dynamiques,
**caractérisé en ce que**
les paramètres d'état sont déterminés dans de courts intervalles de temps, que le contrôleur sur la base des paramètres d'entrée dynamiques et d'un ensemble de règles pour les canaux de transmission (2, 3) détermine les valeurs de transmission et prend les décisions appropriées quant à la façon dont les flux de données sont distribués sur les canaux de transmission (2, 3).

11. Système selon la revendication 10,
**caractérisé en ce qu'**
une fonction de tarification et de règles de politique dans le réseau, PRCF (12), est réalisé, qui comprend des paramètres d'entrée statiques, notamment en ce qui concerne les options d'accès pour le CPE (1) et/ou les largeurs de bande prédéterminées et/ou les spécificités de produit attribuées à l'utilisateur.

12. Système selon la revendication 10 ou 11,
**caractérisé en ce que**
le contrôleur est réalisé dans le point d'accès hybride « HAAP » (7).

13. Système selon la revendication 11,
**caractérisé en ce que**
les paramètres d'entrée sont entrés en tant que spécifications dans une matrice de décision à laquelle le HAAP (7) a accès.

14. Système selon une des revendications 10 à 13,
**caractérisé en ce que**
les spécificités de produit « Market Requirements » sont réalisés dans une base de données de fonctions.
